(19) Europäisches Patentamt
European Patent Office
Office européen des brevets

(11) Numéro de publication : **0 113 744 B1**

(12) **FASCICULE DE BREVET EUROPÉEN**

(45) Date de publication du fascicule du brevet : **09.08.89**

(51) Int. Cl.$^4$ : **H 05 B 37/02**

(21) Numéro de dépôt : **83902267.0**

(22) Date de dépôt : **22.07.83**

(86) Numéro de dépôt international : **PCT/FR 83/00150**

(87) Numéro de publication internationale : **WO/8400663 (16.02.84 Gazette 84/05)**

(54) **SYSTEME DE GRADATION DE PUISSANCE A DISTRIBUTION MONOLIGNE DES COMMANDES ET DE L'ENERGIE.**

(30) Priorité : **22.07.82 FR 8212814**

(43) Date de publication de la demande : **25.07.84 Bulletin 84/30**

(45) Mention de la délivrance du brevet : **09.08.89 Bulletin 89/32**

(84) Etats contractants désignés : **BE CH DE GB LI LU NL SE**

(56) Documents cités :
**GB-A- 2 076 180**
**Le dossier contient des informations techniques présentées postérieurement au dépôt de la demande et ne figurant pas dans le présent fascicule.**

(73) Titulaire : **RAMANANTSOA, Johnson**
**12 rue Théophile Naudy**
**F-45000 Orléans (FR)**

(72) Inventeur : **RAMANANTSOA, Johnson**
**12 rue Théophile Naudy**
**F-45000 Orléans (FR)**

**EP 0 113 744 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

Dans le domaine des équipements scéniques, deux besoins importants s'étaient fait sentir depuis quelques années en ce qui concerne les salles de spectacles équipées de jeux d'orgue de lumière :

Au niveau de l'installation : le souhait de l'allègement du réseau de câblage électrique pour la distribution de la puissance graduée aux projecteurs.

Au niveau de l'exploitation : le souci de la simplification de l'opération dite de « fichage » ou de « groupage » lorsque le regroupement des projecteurs sur un même circuit est nécessaire.

Le système objet de l'invention a pour but de répondre à ces besoins.

L'illustration du bien-fondé de ces préoccupations peut être faite sur un exemple de salle de théâtre équipée d'un jeu d'orgues à 100 circuits (nombre de gradateurs pilotés), de 200 projecteurs disponibles, et d'une baie de fichage manuel installée dans le local-énergie.

La solution en système classique donne la configuration suivante :

a) Du côté câblage :

100 paires de conducteurs vont du pupitre au local-énergie pour la commande des gradateurs sur une longueur de 50 à 100 mètres.

100 conducteurs de puissance font la jonction des sorties de gradateurs à la baie de fichage sur une longueur de 5 à 10 m.

200 câbles de puissance partent du local-énergie pour transporter la puissance graduée aux projecteurs sur une longueur de 200 à 300 mètres.

b) Du côté fichage :

Chaque prise de circuit étant au moins doublée pour permettre le groupage, la baie de fichage comprend au moins 200 prises de lignes de sortie.

De part et d'autre de la baie de fichage, pendent les 200 fiches-mâles de puissance correspondant aux 200 lignes de projecteurs.

L'opération de fichage ou de groupage consiste à affecter manuellement les différentes lignes de projecteurs aux différents circuits de gradateurs, les combinaisons étant définies en fonction du programme prévu.

En conclusion, installation électrique coûteuse et encombrante, opération de fichage-groupage lourde et fastidieuse, constituent les deux inconvénients majeurs de la version classique des jeux d'orgue de lumière actuellement existants.

Dans le document GB-A-2 076 180 il est connu un dispositif de gradation électrique de la puissance de projecteurs de lumière comprenant une ligne de distribution de signaux de commande et une ligne de distribution d'énergie électrique, reliant un moniteur situé dans un local de commande centrale, ayant un organe de base à microprocesseur à clavier, à plusieurs récepteurs gradateurs situés du côté utilisateur comprenant un microprocesseur esclave muni de moyens de décodage d'adresses permettant l'identification des signaux de commandes, ces signaux étant émis sous forme de paquets numériques par l'organe de base à microprocesseur et transmis en série sur la ligne de distribution, l'opération de fichage et de groupage des projecteurs s'effectuant par la composition des commandes au clavier du moniteur.

Ce dispositif connu, sur lequel se base le préambule de la revendication, comporte du côté utilisateur plusieurs récepteurs réunis sur un seul « rack » qui transforme les commandes numériques en signaux analogiques ; chaque récepteur alimente un groupe de gradateurs pour des projecteurs qui peuvent encore être situés à divers emplacements de la scène.

Ce dispositif ne fait donc que réduire les problèmes d'installation et de fichage-groupage décrits plus haut, mais ne les élimine pas.

Le but de l'invention est donc d'appliquer le principe adopté par l'art antérieur pour des groupes de gradateurs en toute conséquence aux gradateurs proprement dits en attribuant un récepteur à chacun des gradateurs, ce récepteur ayant par conséquent la fonction d'un terminal intelligent.

A cette fin, le dispositif d'après l'invention est caractérisé en ce que chaque récepteur est attribué à un unique gradateur associé à au moins un projecteur, chaque récepteur étant doté de son adresse propre, effectuant par le microprocesseur esclave la fonction de gradation instantanée, la fonction de changement d'adresse pour le fichage et le groupage et la temporisation du transfert de niveau de gradation, chaque récepteur comprenant un module de conversion des signaux d'angle d'ouverture d'un organe de commande du projecteur, et caractérisé en ce que les récepteurs sont tous reliés à un bus passif regroupant la ligne de distribution de signaux numériques et la ligne de distribution d'énergie.

Cette disposition permet d'une part une programmation minutieuse pour le fichage et groupage allant jusqu'à chaque gradateur, ce qui apporte une extrême souplesse des commandes, et d'autre part vu que le système ne comporte qu'une seule ligne de distribution de l'énergie et une seule ligne de transmission des commandes grâce à ses nouveaux gradateurs numériques intelligents, une réduction appréciable du coût d'installation, due à l'unicité du support de l'énergie et des informations de commandes. Le système est conçu pour répondre à toutes les applications faisant appel à la gradation sélective de puissance, et l'innovation réside fondamentalement dans le gradateur numérique appelé plus bas « IGNIS » en tant que terminal intelligent.

En conclusion, dans le domaine de la gradation de puissance, en l'occurrence dans celui des équipements scéniques, la solution apportée, bâtie autour du couple communication-série/gradateur — numérique — intelligent, présente les deux finalités suivantes :

Installation du réseau de câblage électrique réduite à sa plus simple expression.

Développement de logiciels puissants et performants réduisant les opérations complexes, telles que fichage et groupage dans les jeux d'orgues de lumière, à de simples commandes formées au niveau du clavier du Moniteur du système.

Les dessins montrent un mode particulier de réalisation.

Sur ces dessins :

la Fig. 1 est un logigramme du coupleur MI2X et des extensions EX (partie Emission),

la Fig. 2 est un schéma d'analyse fonctionnelle du processeur coupleur MI2X de la Fig. 1,

la Fig. 3 est un organigramme électronique d'un récepteur gradateur IGNIS associé au processeur MI2X (partie Réception),

la Fig. 4 est un schéma d'analyse fonctionnelle du gradateur IGNIS de la Fig. 3,

la Fig. 5 est un logigramme montrant le principe de la commande numérique du module CNT du gradateur IGNIS de la Fig. 3,

la Fig. 6 donne la variation en fonction du temps de divers paramètres intervenant dans le logigramme de la Fig. 5,

la Fig. 7 est un organigramme électronique du module CNT (Commande numérique du Triac),

la Fig. 8 est un synoptique électronique du module CNT.

Le dispositif, appelé dès à présent « MIGNIX » est constitué par l'ensemble de trois unités, un coupleur MI2X, un bus passif CANALIS et le récepteur intelligent IGNIS.

Schéma de principe :

PROCESSUS CENTRAL ===> MI2X ===> CANALIS ===> IGNIS (x)

A Connecté à un processus central, MIGNIX est un périphérique de gradation de puissance à (x) éléments dont les caractéristiques principales sont :

MI2X = coupleur assurant le multiplexage des informations-sources et la transmission-série des informations-sorties sous forme de paquets numériques.

CANALIS = bus assurant la distribution de la puissance et le support de diffusion des paquets numériques.

IGNIS = récepteur intelligent assurant, à partir des informations-séries reçues, la gradation numérique de la puissance et l'interprétation des directives de différentes procédures particulières, telles que :

- assignation d'adresse logique du récepteur,
- temporisation du transfert de niveau,
- instruction de gestion de fonctions spéciales à caractère de diffusion générale :
  - extinction,
  - ignition,
  - vérification des circuits.

B Le coupleur MI2X peut être complété par les modules d'extension EX1 ou EX2 (voir fig. 1). Equipé par la première, extension EX1, MIGNIX reçoit la fonction d'un processeur central offrant la possibilité de gérer différents types d'organes périphériques :

en entrée = sources externes logiques parallèle et série,

en sortie = mémoire de masse sauvegardée ou non, disque mini-floppy simple ou double densité, 5 pouces, imprimante.

A l'aide de son logiciel-moniteur spécifique, MIGNIX permet alors la conduite en temps-réel de l'application « gradation-de-puissance » avec les fonctions afférentes décrites par les schémas suivants :

Cf. Schéma n° 01/MI2X — Logigramme MI2X et les extensions.
fig. 1/6.
Schéma n° 03/MI2X — Tableau des fonctions programmables.
Page 10.

Multiplexage-interface/interface-sortie-série
Schéma n° 01/MI2X — fig. 1
Logigramme MI2X & les extensions

Schéma articulant les différentes extensions autour de la configuration de base MI2X.

la source externe analogique peut comporter jusqu'à 255 stations,

la base est gérée par un µp-local et fonctionne point à point en transfert direct,

le traitement d'une station est traduit en sortie par l'émission de paquets numériques,

la dotation au coupleur d'un nouvel interface lui confère une nouvelle dénomination :

équipé de EX1, le coupleur devient MI3X,

équipé de EX1 et EX2, il devient MI4X,

les autres extensions sont optionnelles.

Sur la figure 1 apparaissent, espacés par des cadres en tirets :

la Base 10, comportant :

un moyen 12 (interface, multiplexage, conversion A/D) de saisie des sources externes de commande analogiques 14,

un moyen 16 de transmission série des informations de commande vers les gradateurs.

les extensions EX1/EX2, comportant :

un moyen de génération locale des sources de commande (EX1),

un moyen de mémorisation des informations de commande (EX2).

les options EX associées aux extensions, comportant :

un moyen 18 de saisie des sources externes 20 de commande logique parallèle ou série,

un moyen 22 ou 24 d'archivage des informations de commande sur disquette ou sur imprimante.

La base 10 fonctionne de la façon suivante (fig. 1 et 2) :

la source externe de commandes analogiques peut comporter 255 voies adressées, comme indiqué plus haut : à une adresse de voie correspond une adresse de gradateur,

le microprocesseur 30 traite une voie en indiquant en 32 l'adresse au Multiplexeur 34 qui communique la valeur analogique au convertisseur analogique/digital 36 exprimant le niveau de gradation,

si le circuit de mode de transfert 38 est sur direct, le microprocesseur 30 aiguille directement vers la sortie 40 le couple d'information (adresse, niveau digital) et en effectue la transmission série sur la ligne du bus CANALIS 42 à l'aide de l'interface sortie-série asynchrone 44,

si le circuit de mode de transfert 38 est sur mémorisation, dans le cas d'existence de l'extension EX2, le couple (adresse, niveau digital) constitue un bloc d'enregistrement que le microprocesseur 30 aiguille vers la mémoire 46.

Pour le traitement de vérification, voir fig. 3. La programmation est indiquée plus bas.

Les extensions EX1 et EX2 permettent des options, par exemple pour les effets lumineux.

Les effets lumineux sont conçus à partir des fonctions possibles décrites sur les schémas O3/MI2X et 04/MI2X ci-dessous (tableau et définition des fonctions programmables), sont programmés suivant la méthode décrite en page 16 (programmation de fonction) à l'aide du clavier du moniteur 50 du processeur EX1.

Les informations de commande ainsi générées sont formatées, selon les fonctions, en quatre types de paquets numériques décrits sur les schémas 05/MI2X (type de paquets numériques), selon le mode de fonctionnement exploité, temps réel ou programme, les informations de commande sont envoyées respectivement à la base 10 où à l'enregistrement en mémoire 46 (EX2) : en fonctionnement temps réel comme indiqué en 55, si la base 10 est positionnée sur le mode de transfert direct, les informations de commande sont transmises directement vers le bus 42 sans mémorisation ; si la base 10 est positionnée sur le mode de transfert mémorisation, les informations de commande sont d'une part enregistrées en mémoire 46 (EX2) et d'autre part transmises vers le bus 42 par l'intermédiaire de l'organe de Restitution 54 implanté en EX2 entre la mémoire 46 (EX2) et l'organe de transmission 16 de la base 10.

Le bus de transmission passif CANALIS 42 (fig. 1 et 3) assurant la distribution de la puissance et le support de transmission des paquets numériques, est une ligne de canalisation électrique tétrapolaire (fig. 3), deux pôles pour les commandes (transmission et vérification) et deux autres pour la puissance alternative, et comporte des fenêtres de jonction 62 (fig. 3) recevant la sortie du coupleur MI2X (fig. 1) en tant qu'émetteur, et sur lesquelles se connectent les boîtiers-gradateurs en tant que récepteurs (fig. 3).

Le gradateur IGNIS :

Son fonctionnement ressort des figures 3 à 8.

L'information série transmise sur la ligne du bus 42, arrivant au gradateur par le découpleur 64, convertie en parallèle par l'interface série asynchrone 66, est présentée sur le bus interne « données » 68 pour être rangée dans la mémoire RAM du microprocesseur esclave 70 qui exécute le programme enregistré dans la mémoire REPROM 82. Les signaux CLE (contrôle) sont distribués par le bus/contrôle 74. Les signaux décodés provenant du bus/adresse 72 sont décodés en 76 et donnent naissance aux signaux de sélection CS1 à CS4 destinés aux circuits périphériques 78, 80, 66 et 82,

comme indiqué en figure 3, l'adresse physique du gradateur, mémorisée en REPROM 82 dans le cas de la figure, est comparée à l'adresse logique incluse dans le paquet numérique reçu par le microprocesseur suivant le trajet 42-64-66-68-70 :

s'il n'y a pas identité d'adresses, le microprocesseur 70 ignore le paquet numérique, ne concernant pas le gradateur auquel il appartient,

s'il y a identité d'adresses, le microprocesseur 70 identifie le type de paquet numérique et excécute la fonction correspondante qui sera une combinaison des fonctions suivantes, mentionnées en page 10 :

Raz, assignation, temporisation, qui sont des fonctions logicielles faisant l'objet, et d'un traitement propre au microprocesseur.

Gradation, ignition, extinction qui sont des fonctions associées au module CNT recevant par le bus « données » 68 (figure 8), au signal CS2, l'information octet-niveau variable de 0 à 128 (page 9 et figure 6) contenue dans le paquet numérique.

Vérification, qui est une fonction combinée à la fonction Ignition et associée au dispositif de Vérification 78 délivrant à sa sortie, à la réception du signal CS1, le verdict de fonctionnement du gradateur sur le bus 42.

La commande numérique s'effectue par le module CNT ; voir figures 7 et 8. En ce qui concerne le créneau rectangulaire obtenu à partir du monostable, celui-ci détermine avec les déphasages et à l'intérieur de l'axe de sinusoïde, la plage de l'angle d'ouverture du Triac.

Détermination « angle d'ouverture »

Principe amplificateur logique à triac

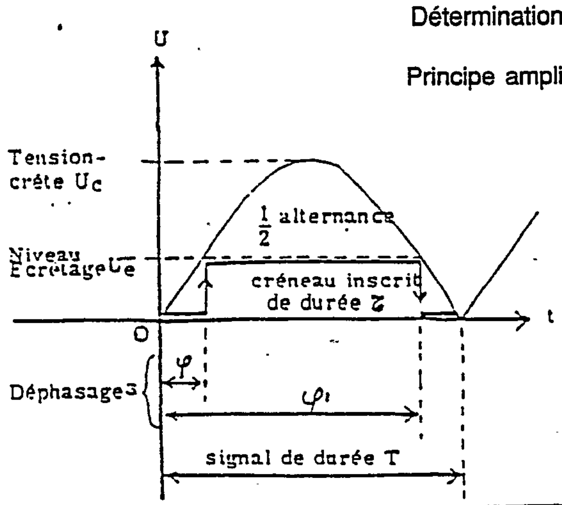


(1)

$$\frac{Ue}{Uc} = \frac{\varphi}{\pi/2}$$

(2)

$$\tau = T\left(1 - \frac{2\varphi}{\pi}\right)$$

- La relation (1) permet de calculer le déphasage φ en fonction de la tension-crête Uc du signal alternatif, et du niveau d'écrêtage Ue.
- La relation (2) permet de calculer la durée τ du créneau rectangulaire inscrit en fonction du déphasage φ, et la durée T de la demi-alternance.

Le créneau rectangulaire inscrit dans la demi-alternance d'un signal alternatif possède les trois propriétés suivantes :
- son niveau-zéro correspond au passage à zéro du signal alternatif.
- son front de montée est déphasé de l'angle φ par rapport au pont-zéro du signal alternatif.
- son front de descente est déphasé de l'angle $\varphi' = \pi - \varphi$ par rapport à ce même point-zéro.

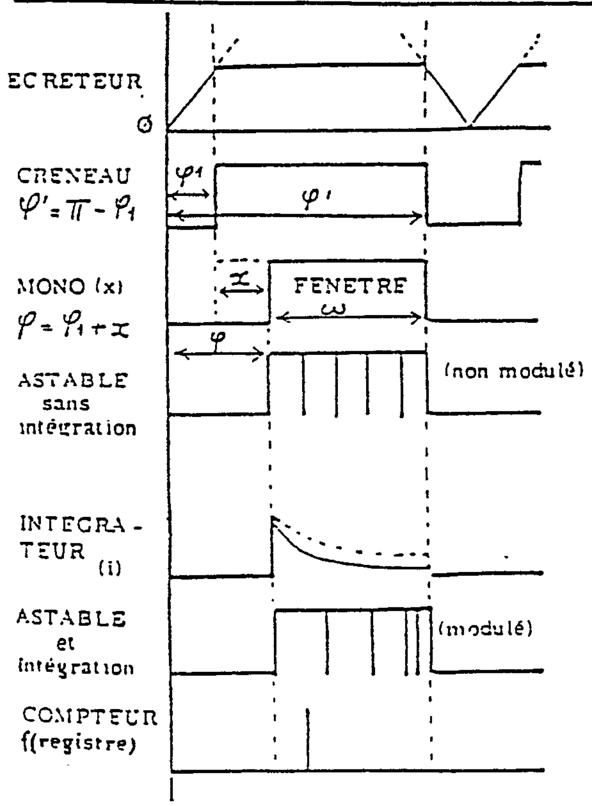


- Les deux relations précédentes permettent de définir d'une part la fenêtre d'ouverture du TRIAC à partir du créneau inscrit, d'autre part les caractéristiques du tranformateur du signal alternatif à partir du niveau de la tension-crête.

- APPLICATION SUR IGNIS :

a) Période de l'ASTABLE = TA = ω /128

T = 10 ms (secteur); = 20° (triac); = 170°

$$\omega = T\left[1 - \frac{20-(180-170)}{180}\right]$$

$$\omega = 10\left(1 - \frac{1}{6}\right) = 8.33 \text{ ms}$$

d'où TA = 8,33/128 ms → FA ≃ 16 kHz

b) Tension crête-crête du TRANSFO = Ucc = 2 x Uc

$$Uc = Ue\,\frac{90}{\varphi 1} = 0.5 \times \frac{90}{10} = 4.5 \text{ V}$$

Ue = 0.5 volt = entrée-écréteur du découpleur d'où Ucc = 9 volts c/c

- OSCILLOGRAMME
  - le schéma ci-contre définit la fonction des differents organes du module CNT -
  - la modulation du train d'impulsions, fonction du taux d'intégration, est définie par le type d application.

Voir : — Organigramme module CNT —

Définitions des fonctions programmables
et des types de paquets numériques

| | |
|---|---|
| Tableau des fonctions | schéma 03/MI2X |
| Définition des fonctions | schéma 04/MI2X |
| Types de paquets numériques | schéma 05/MI2X |

| NUMERO INSTRUCTION | SCHEMA 03 MI2X FONCTIONS PROGRAMMEES | | CODAGE CLAVIER |
|---|---|---|---|
| 00 | GRADATION SYNCHRONISEE | | G1 |
| 01 | VALIDATION GRADATION SYNCHRONISEE | | |
| 02 | ANNULATION | | |
| 03 | ASSIGNATION - Paramètre | 0 | A0 |
| 04 | " " | 1 | A1 |
| 05 | " " | 2 | A2 |
| 06 | " " | 3 | A3 |
| 07 | " " | 4 | A4 |
| 08 | " " | 5 | A5 |
| 09 | " " | 6 | A6 |
| 10 | " " | 7 | A7 |
| 11 | VALIDATION ASSIGNATION | | |
| 12 | ANNULATION | | |
| 13 | RESERVE | | |
| 14 | TEMPORISATION-Paramètre | 0 | T0 |
| 15 | " " | 1 | T1 |
| 16 | " " | 2 | T2 |
| 17 | " " | 3 | T3 |
| 18 | " " | 4 | T4 |
| 19 | VALIDATION TEMPORISATION | | |
| 20 | ANNULATION | | |
| 21 | EXTINCTION INSTANTANEE | | E0 |
| 22 | EXTINCTION TEMPORISEE | | E1 |
| 23 | IGNITION INSTANTANEE | | I0 |
| 24 | IGNITION TEMPORISEE | | I1 |
| 25 | VALIDATION EXTINCTION/ IGNITION | | |
| 26 | ANNULATION | | |
| 27 | VERIFICATON INDIVIDUELLE | | V1 |
| 28 | INHIBITION VERIFICATION | | V0 |
| 29 | VALEUR ADRESSE PHYSIQUE | | |
| 30 | VALEUR TEMPORISATION | | |
| 31 | RAZ GENERALE PROGRAMMATION | | R0 |

| FONCTIONS | DEFINITION DE LA FONCTION: Schema 04 MICX |
|---|---|
| G1 | Tous les IGNIS, successivement adressés, déclenchant simultanément l'opération de gradation à la réception du signal de validation constituant le top-synchro. |
| A0 | L'IGNIS d'adresse-logique A prend l'adresse-logique A', sans changer de niveau. |
| A1 | L'IGNIS d'adresse-logique prend l'adresse-logique A', avec un nouveau niveau. |
| A2 | L'IGNIS d'adresse-logique A reprend son adresse-physique, sans changer de niveau. |
| A3 | L'IGNIS d'adresse-logique A reprend son adresse-physique, avec un nouveau niveau. |
| A4 | Tous les IGNIS reprennent leur adresse-physique, sans changer de niveau. |
| A5 | Tous les IGNIS reprennent leur adresse-physique, avec un nouveau niveau. |
| A6 | Tous les IGNIS prennent la même adresse-logique A, sans changer de niveau. |
| A7 | Tous les IGNIS prennent la même adresse-logique A, avec un nouveau niveau. |
| T0 | Temporisation avec conservation du niveau-en-cours. |
| T1 | Temporisation avec affichage d'un nouveau niveau-origine. |
| T2 | Rupture de la temporisation avec conservation du niveau-en-cours. |
| T3 | Rupture de la temporisation avec affichage d'un nouveau-niveau. |
| T4 | Rupture de la temporisation avec affichage du niveau-prévu. |
| E0 | Tous les IGNIS affichent instantanément le niveau-zéro. |
| E1 | Tous les IGNIS descendent au niveau-zéro en fonction de la valeur-temporisation. |
| [illegible] | Tous les IGNIS affichent instantanément le même niveau-prévu. |
| I1 | Tous les IGNIS affichent le même niveau-prévu en fonction de la valeur-temporisation. |

| FONCTION | DEFINITION DE LA FONCTION (suite) |
| --- | --- |
| V1 | L'IGNIS adressé mémorise à sa sortie-verdict le résultat de vérification du circuit. |
| V0 | L'IGNIS adressé inhibe sa sortie-verdict de vérification. |
| R0 | Annulation de toute programmation sur tous les IGNIS :<br>- rupture de temporisation<br>- affichage de niveau-zero<br>- reprise d'adresse-physique<br>- inhibition vérification. |

| TERMINOLOGIE | |
| --- | --- |
| ASSIGNATION | - opération consistant à affecter à IGNIS une adresse-logique differente de l'adresse-physique. |
| ADRESSE-PHYSIQUE | - adresse immuable, physiquement programmée dans IGNIS, accessible par MI2X exclusivement à partir de la fonction d'assignation dans la valeur-adresse (physique) . |
| ADRESSE-LOGIQUE | - adresse de communication MI2X/IGNIS pour toutes les fonctions : normalement égale à l'adresse-physique pour IGNIS, et affectée arbitrairement à IGNIS par MI2X dans la fonction d'assignation d'adresse (logique). |
| TEMPORISATION | - opération de gradation à partir d'un niveau-origine à un niveau-prévu, avec une évolution linéaire monotone du niveau pendant un temps donné. |

Les types de paquets numériques
Schémas 05/MI2X : (pages 9 et 10)

Schémas donnant l'identification et la structure des différents paquets numériques.

Paquet 0 : 3 bytes contenant — la programmation de de base GO O DIR O G1 O Ax O Tx — l'adresse logique sur 8 bits — le niveau sur 7 bits.

Paquet 1 : 1 byte spécifique DIR, contenant l'instruction sur 5 bits.

Paquet 2 : 3 bytes contenant — l'identification « valeur-adresse » — valeur de l'adresse-physique sur 10 bits.

Paquet 3 : 4 bytes contenant — l'identification « valeur-tempo » — valeur temporisation en secondes sur 15 bits.

Nota

DIR figure dans Paquet 0 en tant que programmation de base, et ne comporte en réalité que 1 byte — Paquet 1.

Paquet-type ∅: trois caractères data 1 — data 2 — data 3

| | | | | | | | | |
|---|---|---|---|---|---|---|---|---|
| PB2 | PB1 | PB∅ | A4 | A3 | A2 | A1 | A∅ | DATA 1 = 3 bits de programmation de base + 5 bits d'adresse |
| ∅ | ∅ | ∅ | N6 | N5 | A7 | A6 | A5 | DATA 2 = 3 bits de code + 2 bits de niveau + 3 bits d'adresse |
| 1 | 1 | ∅ | N4 | N3 | N2 | N1 | N∅ | DATA 3 = 3 bits de code + 5 bits de niveau |

- champ d'adressage-logique sur 8 bits = 255 adresses logiques
- plage de niveau sur 7 bits = 128 points
- programmations de base → - PB- = ∅∅1 = GRADATION DIRECTE-AUTONOME G∅
  - " = ∅1∅ = DIRECTIVES DIR
  - " = ∅11 = GRADATION SYNCHRONISEE G1
  - " = 1∅∅ = ASSIGNATION Ax
  - " = 1∅1 = TEMPORATION Tx

Paquet-type 1 : un caractère data 1

| | | | | | | | | |
|---|---|---|---|---|---|---|---|---|
| ∅ | 1 | ∅ | In4 | In3 | In2 | In1 | In∅ | DATA 1 = 3 bits de code correspondant à DIRECTIVES + 5 bits d'instruction correspondant à 32 instructions différentes définissant le TABLEAU DES FONCTIONS PROGRAMMABLES - Schéma n° ∅3/MI2X |

...../......

19/05/82/JR Schéma n° ∅5/MI2X
Les types de
Paquets numériques

Paquet-type 2 : trois caractères data 1 — data 2 — data 3
================

| | | | | | | | | |
|---|---|---|---|---|---|---|---|---|
| Ø | 1 | Ø | 1 | 1 | 1 | Ø | 1 | DATA 1 = 3 bits code DIRECTIVES + code 29 "valeur adresse" |
| Ø | Ø | Ø | VA4 | VA3 | VA2 | VA1 | VAØ | DATA 2 = 3 bits de code + 5 bits de valeur d'adresse physique |
| 1 | 1 | Ø | VA9 | VA8 | VA7 | VA6 | VA5 | DATA 3 = 3 bits de code + 5 bits de valeur d'adresse physique |

champ d'adressage - physique sur 1Ø bits = 1Ø24 adresses physiques

Paquet-type 3 : quatre caractères data 1 — data 2 — data 3 — data 4 —
================

| | | | | | | | | |
|---|---|---|---|---|---|---|---|---|
| Ø | 1 | Ø | 1 | 1 | 1 | 1 | Ø | DATA 1 = 3 bits code DIRECTIVES + code 3Ø " valeur tempo" |
| Ø | Ø | Ø | VT4 | VT3 | VT2 | VT1 | VTØ | DATA 2 = 3 bits de code + 5 bits de valeur de tempo |
| 1 | 1 | Ø | VT9 | VT8 | VT7 | VT6 | VT5 | DATA 3 = 3 bits de code + 5 bits de valeur de tempo |
| 1 | 1 | 1 | VT14 | VT13 | VT12 | VT11 | VT1Ø | DATA 4 = 3 bits de code + 5 bits de valeur de tempo |

- étendue de valeur de temporisation sur 15 bits = 32 368 secondes

| 7 | 6 | 5 | 4 | 3 | 2 | 1 | Ø | = pondération des bits de l'octet DATA |
|---|---|---|---|---|---|---|---|---|

... / ...

19/05/82/JR Schéma n° Ø5/MI2X
Les types de
Paquets numériques

Dispositif MI2X : programmation de fonction

Description de la conduite au clavier de la programmation de fonction.

A l'exception de la fonction GO qui se boucle hors-contrôle du moniteur, toutes les fonctions programmables sont sous contrôle du moniteur en fonctionnement temps-réel, et nécessitent donc l'envoi d'une instruction de validation ou d'annulation avant de s'exécuter.

Deux méthodes sont alors possibles dans la conduite du procédé :

a) circuit par circuit : former la programmation du circuit au clavier et envoyer immédiatement après le code de validation.

b) par groupe de circuits : former au clavier la programmation de tous les circuits sélectionnés, puis envoyer le code de validation.

La conduite circuit-par-circuit, moins rapide, permet la conservation des circuits déjà programmés en cas d'annulation de la programmation en cours. Par contre, la conduite par groupe-de-circuits, plus rapide, entraîne la non-programmation de tous les circuits du groupe en cas d'annulation de la programmation en cours.

Nota

une annulation n'est paps une déprogrammation,

suggestion de moyens mnémoniques pour la liste des commandes de fonctions : Vitrage ou Gravite

A = Assignation
E = Extinction
G = Gradation
I = Ignition
R = Remise à zéro
T = Temporisation
V = Vérification.

## Revendication

Dispositif de gradation électrique de la puissance de projecteurs de lumière comprenant une ligne de distribution de signaux de commandes et une ligne de distribution d'énergie électrique, reliant un moniteur (30, 50) situé dans un local de commande centrale, ayant un organe de base à microprocesseur (30) à clavier (50), à plusieurs récepteurs gradateurs (IGNIS) situés du côté utilisateur, comprenant un microprocesseur esclave (70) muni de moyens de décodage d'adresses (76) permettant l'identification des signaux de commandes, ces signaux étant émis sous forme de paquets numériques par l'organe de base à microprocesseur et transmis en série sur la ligne de distribution de signaux, l'opération de fichage et groupage des projecteurs s'effectuant par la composition des commandes au clavier du moniteur (30, 50), caractérisé en ce que chaque récepteur (IGNIS) est attribué à un unique gradateur associé à au moins un projecteur, chaque récepteur étant doté de son adresse propre, effectuant par le microprocesseur esclave (70) la fonction de gradation instantanée, la fonction de changement d'adresse pour le fichage et le groupage et la temporisation du transfert de niveau de gradation, chaque récepteur (IGNIS) comprenant un module (80) de conversion des signaux d'angle d'ouverture d'un organe de commande du projecteur, et caractérisé en ce que les récepteurs (IGNIS) sont tous reliés à un bus passif (42) regroupant la ligne de distribution de signaux numériques et la ligne de distribution d'énergie.

## Claim

Electric control device for controlling the power of spotlights, comprising a line for distributing control signals and an electric power distribution line, connecting a monitor (30, 50) located in a central control room, having a base unit with a microprocessor (30) and a keyboard (50) with a plurality of graduators-receivers (IGNIS) located on the user's side, comprising a slave microprocessor (70) provided with address decoding means (76) for identification of the control signals, said signals being transmitted as digital packets by the base unit with the microprocessor and being conveyed in series relation on the signal distribution line, the operation of assignment and grouping of the spotlights being carried out by compsing controls with the keyboard of the monitor (30, 50), characterized in that each receiver (IGNIS) is assigned to only one graduator associated with at least one spotlight, each receiver being provided with its own address, carrying out the function of instantaneous graduation through the slave microprocessor (70), the function of address change for the assignment and grouping as well as for the timing of the graduation level transfer, each receiver (IGNIS) comprising a module (80) for converting the opening angle signals of a unit controlling the spotlight, and characterized in that the receivers (IGNIS) are all connected to a passive bus (42) comprising the digital signal distribution line and the power distribution line.

## Patentanspruch

Einrichtung für die elektrische Steuerung der Leistung von Lichtscheinwerfern mit einer Leitung für die Verteilung von Steuersignalen und einer Leitung für die Verteilung elektrischer Energie, wobei diese Leitung ein Pult (30, 50), welches sich in einem Zentralsteuerraum befindet und welches ein Basisorgan mit einem Mikroprozessor (30) mit Tastatur (50) umfaßt, mit mehreren Empfängerreglern (IGNIS) verbindet, die sich auf der Seite des Benützers befinden, umfassend einen Sklavenmikroprozessor (70) mit Adressendekodiermitteln (76) zur Identifizierung von Steuersignalen, wobei diese Signale in Form von Digitalpaketen durch das Mikroprozessorbasisorgan ausgesendet werden und in Serie auf die Signalverteilerleitung übertragen werden, wobei der Arbeitsvorgang zur Verbindung und Gruppierung der Scheinwerfer mit Hilfe der Bedienung der Steuerorgane der Tastatur des Pults (30, 50) erfolgt, dadurch gekennzeichnet, daß jeder Empfänger (IGNIS) einem einzigen Regler zugeteilt ist, welcher mit zumindest einem Scheinwerfer verbunden ist, wobei jeder Empfänger seine eigene Adresse hat, wobei durch den Sklavenmikroprozessor (70) die Funktion der augenblicklichen Regelung durchgeführt wird, sowie die Funktion der Adressenänderung zur Verbindung und Gruppierung und Verzögerung der Regelungsniveauübertratung, wobei jeder Empfänger (IGNIS) ein Modul (80) zur Umsetzung der Öffnungswinkelsignale eines Steuerorgans des Scheinwerfers umfaßt, sowie dadurch gekennzeichnet, daß alle Empfänger (IGNIS) mit einem passiven Bus (42) verbunden sind, welcher die Digitalsignalverteilerleitung und die Energieverteilerleitung umgruppiert.

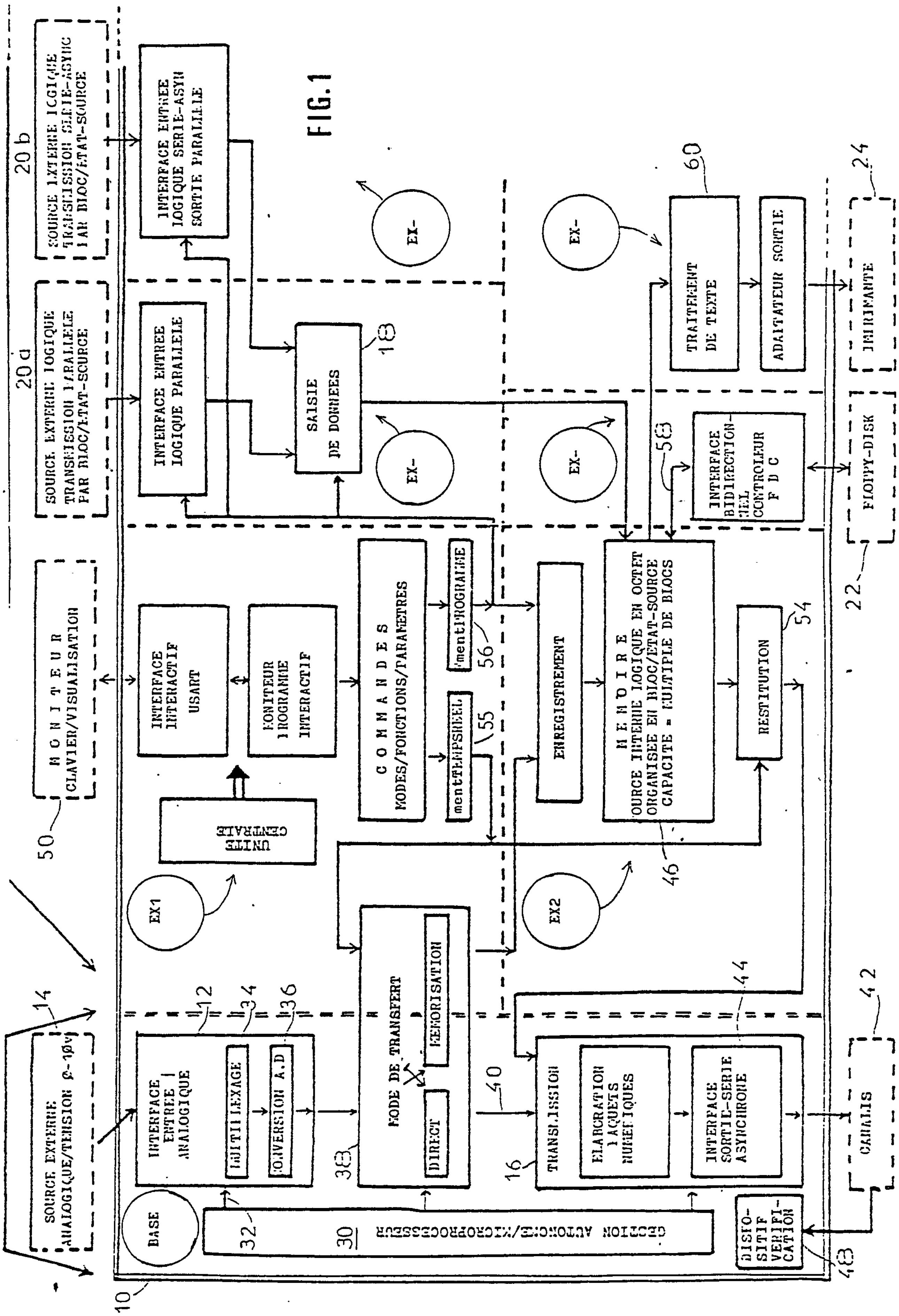
SOURCE EXTERNE ANALOGIQUE/TENSION 0-10v
INTERFACE ENTREE ANALOGIQUE
MULTIPLEXAGE
CONVERSION A.D
MODE DE TRANSFERT
DIRECT
MEMORISATION
TRANSMISSION
ELABORATION PAQUETS NUMERIQUES
INTERFACE SORTIE-SERIE ASYNCHRONE
CANAUX
BASE
GESTION AUTONOME/MICROPROCESSEUR
DISPOSITIF VERIFICATION
EX1
EX2
UNITE CENTRALE
MONITEUR CLAVIER/VISUALISATION
INTERFACE INTERACTIF USART
MONITEUR PROGRAMME INTERACTIF
COMMANDES MODES/FONCTIONS/PARAMETRES
ENREGISTREMENT
MEMOIRE SOURCE INTERNE LOGIQUE EN OCTET ORGANISEE EN BLOC/ETAT-SOURCE CAPACITE = MULTIPLE DE BLOCS
RESTITUTION
SOURCE EXTERNE LOGIQUE TRANSMISSION PARALLELE PAR BLOC/ETAT-SOURCE
INTERFACE ENTREE LOGIQUE PARALLELE
SAISIE DE DONNEES
SOURCE EXTERNE LOGIQUE TRANSMISSION SERIE-ASYNC PAR BLOC/ETAT-SOURCE
INTERFACE ENTREE LOGIQUE SERIE-ASYN SORTIE PARALLELE
INTERFACE BIDIRECTIONNEL CONTROLEUR F D C
FLOPPY-DISK
TRAITEMENT DE TEXTE
ADAPTATEUR SORTIE
IMPRIMANTE
EX-
10
12
14
16
18
20a
20b
22
24
30
32
34
36
38
40
42
44
46
48
50
54
55
56
58
60
FIG.1

FIG. 2

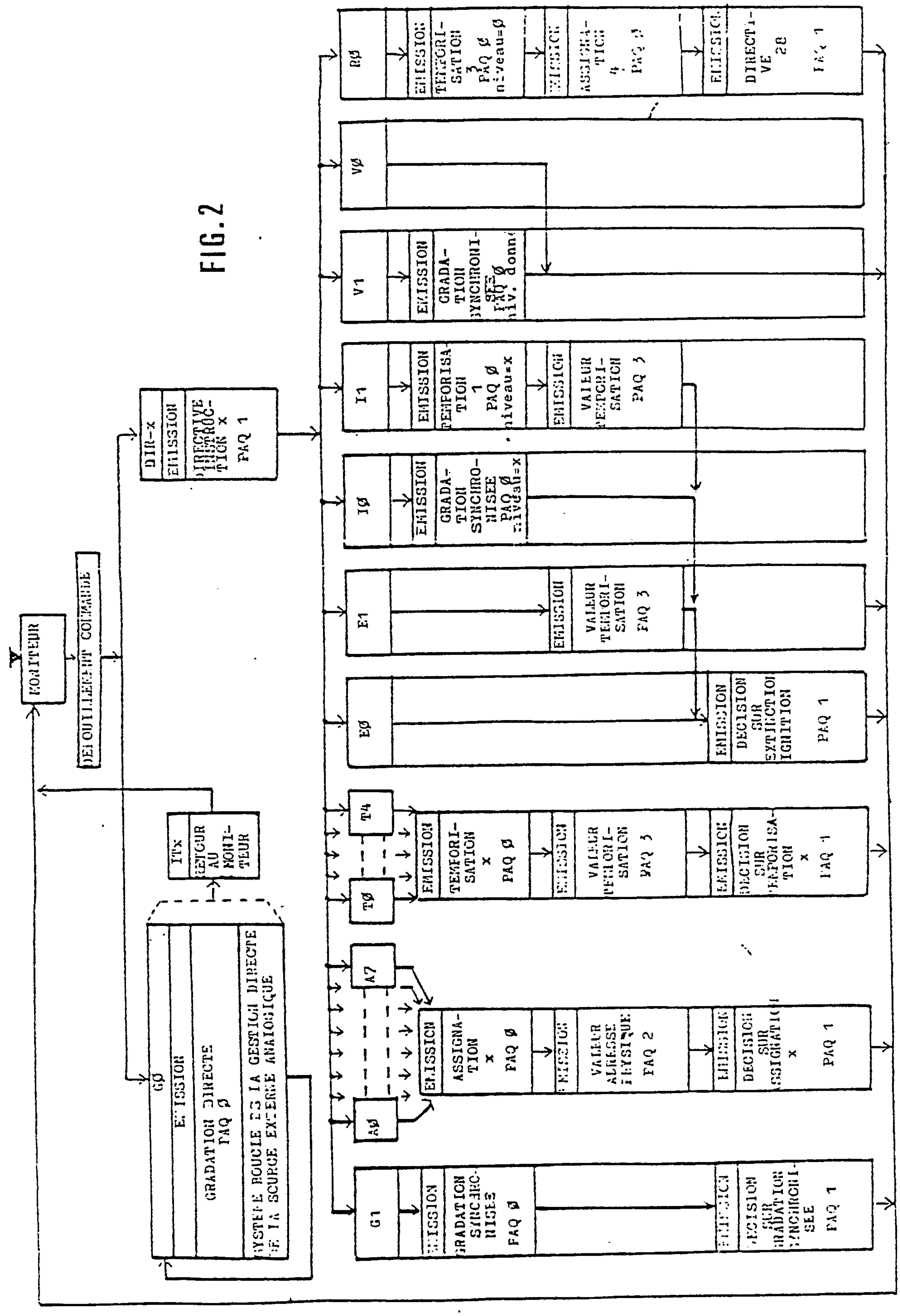
MONITEUR
DEROULEMENT COMMANDE
DIR-x
EMISSION
DIRECTIVE INSTRUCTION x
PAQ 1
ITx
RETOUR AU MONITEUR
GØ
EMISSION
GRADATION DIRECTE
PAQ Ø
SYSTEME BOUCLE DE LA GESTION DIRECTE DE LA SOURCE EXTERNE ANALOGIQUE
G1
GRADATION SYNCHRONISEE
DECISION SUR GRADATION SYNCHRONISEE
AØ
A7
ASSIGNATION x
VALEUR ADRESSE PHYSIQUE
PAQ 2
DECISION SUR ASSIGNATION x
TØ
T4
TEMPORISATION x
VALEUR TEMPORISATION
PAQ 3
DECISION SUR TEMPORISATION x
EØ
DECISION SUR EXTINCTION IGNITION
E1
IØ
GRADATION SYNCHRONISEE
I1
TEMPORISATION 1
VØ
V1
RØ
ASSIGNATION 4
DIRECTIVE 28

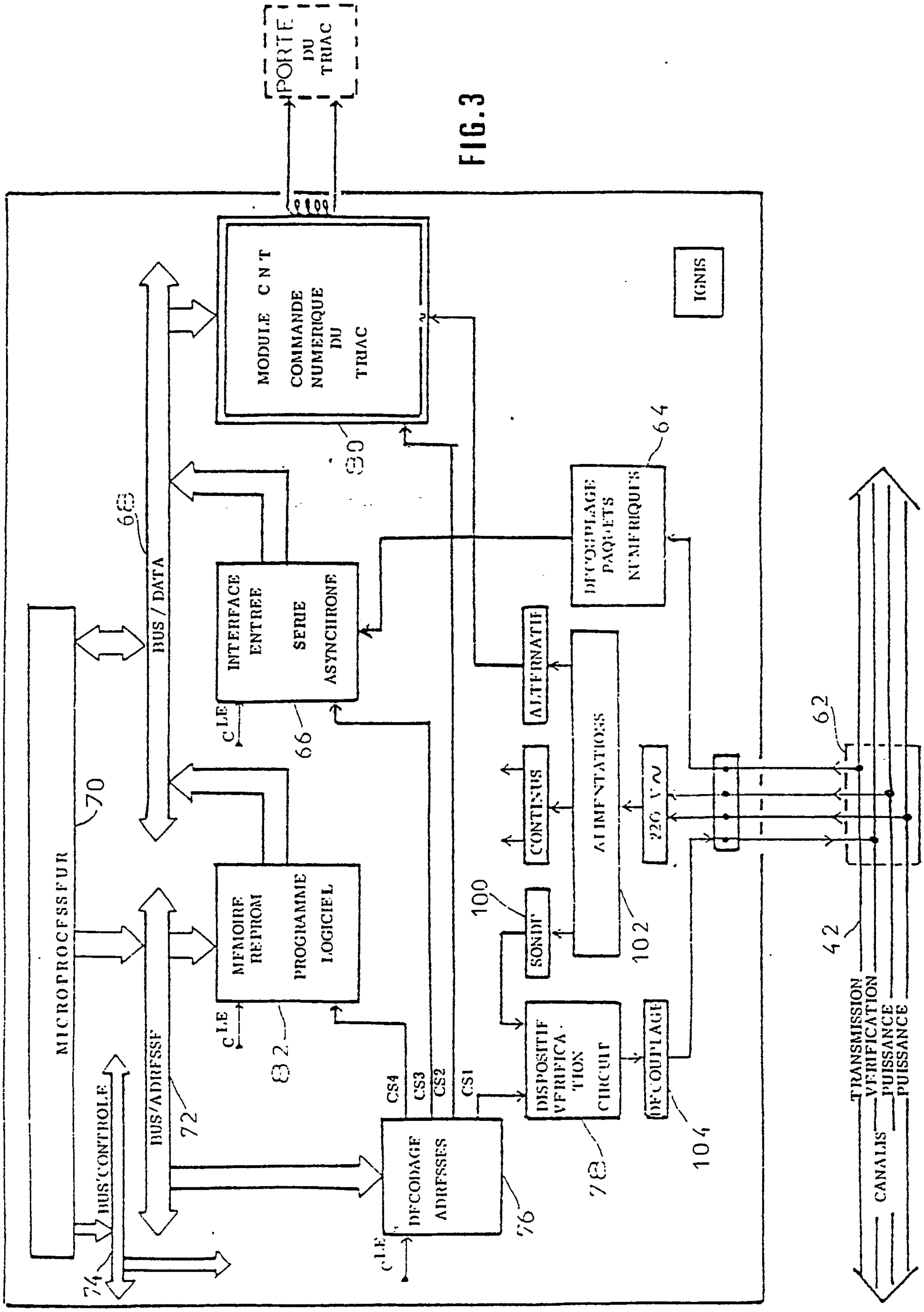
PORTE
DU
TRIAC
MODULE C N T
COMMANDE
NUMERIQUE
DU
TRIAC
90
IGNIS
BUS / DATA
68
INTERFACE
ENTREE
SERIE
ASYNCHRONE
66
$C^{LE}$
MICROPROCESSEUR
70
MEMOIRE
REPROM
PROGRAMME
LOGICIEL
82
BUS/ADRESSE
72
BUS CONTROLE
74
DECODAGE
ADRESSES
76
CS4
CS3
CS2
CS1
DISPOSITIF
VERIFICA-
TION
CIRCUIT
78
DECOUPLAGE
104
SONDE
100
ALIMENTATIONS
102
CONTINUS
ALTERNATIF
220 V ~
DECOUPLAGE
PAQUETS
NUMERIQUES
64
62
42
CANALIS
TRANSMISSION
VERIFICATION
PUISSANCE
PUISSANCE

FIG. 3

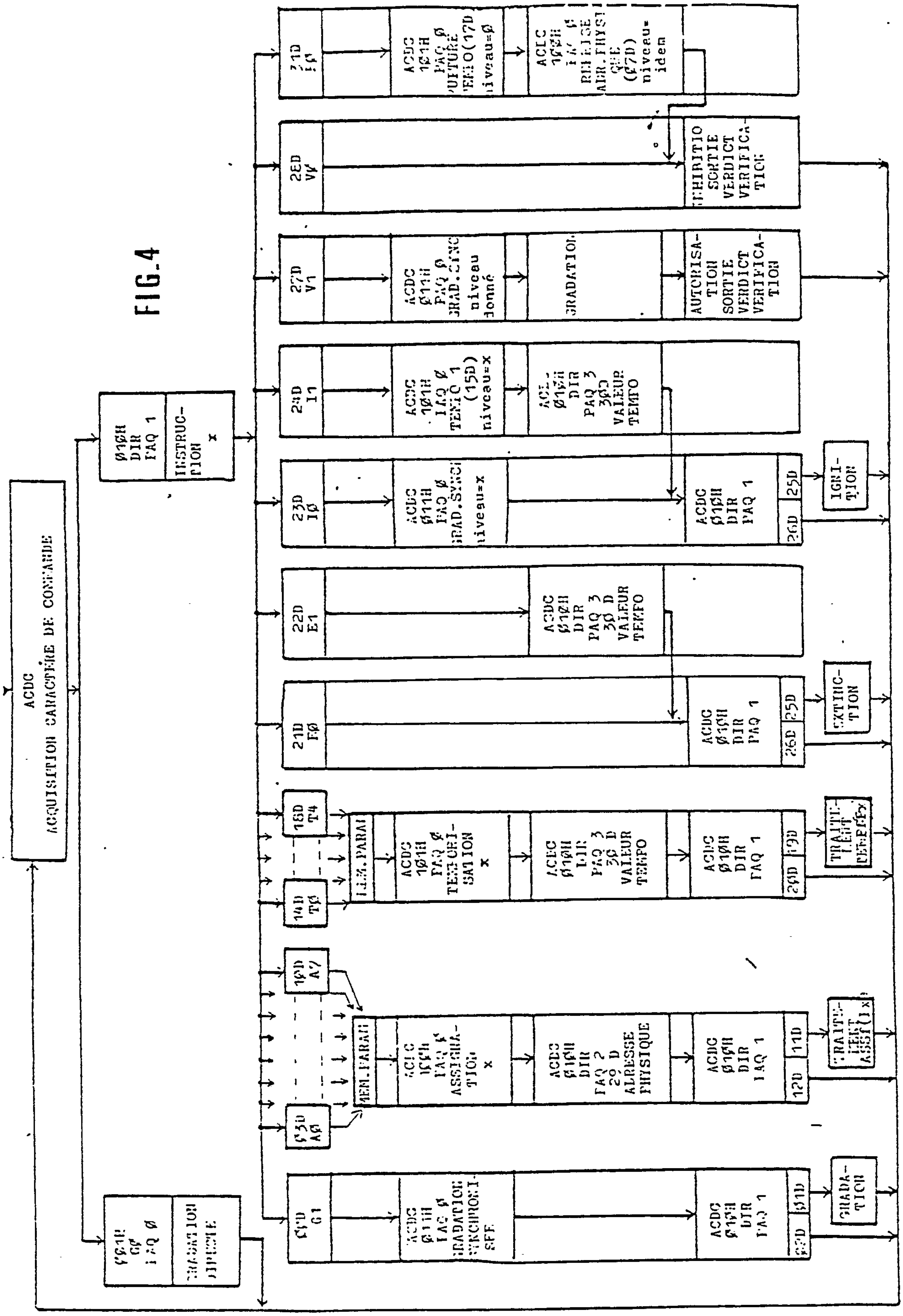
ACDC
ACQUISITION CARACTÈRE DE COMMANDE
GRADATION
IGNI-TION
EXTINC-TION
AUTORISA-TION SORTIE VERDICT VERIFICA-TION

FIG.4

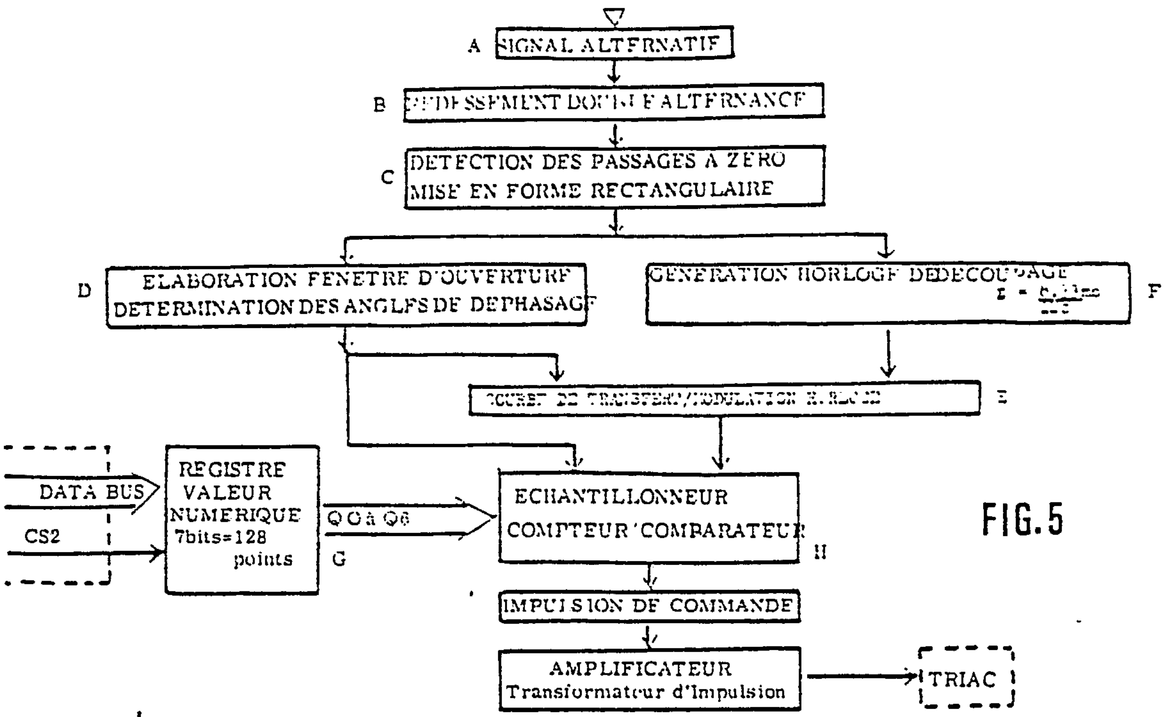
SIGNAL ALTERNATIF
DETECTION DES PASSAGES A ZERO
MISE EN FORME RECTANGULAIRE
ELABORATION FENETRE D'OUVERTURE
DETERMINATION DES ANGLES DE DEPHASAGE
DATA BUS
CS2
REGISTRE VALEUR NUMERIQUE 7bits=128 points
Q0 à Q6
ECHANTILLONNEUR
COMPTEUR COMPARATEUR
IMPULSION DE COMMANDE
AMPLIFICATEUR
Transformateur d'Impulsion
TRIAC

FIG.5

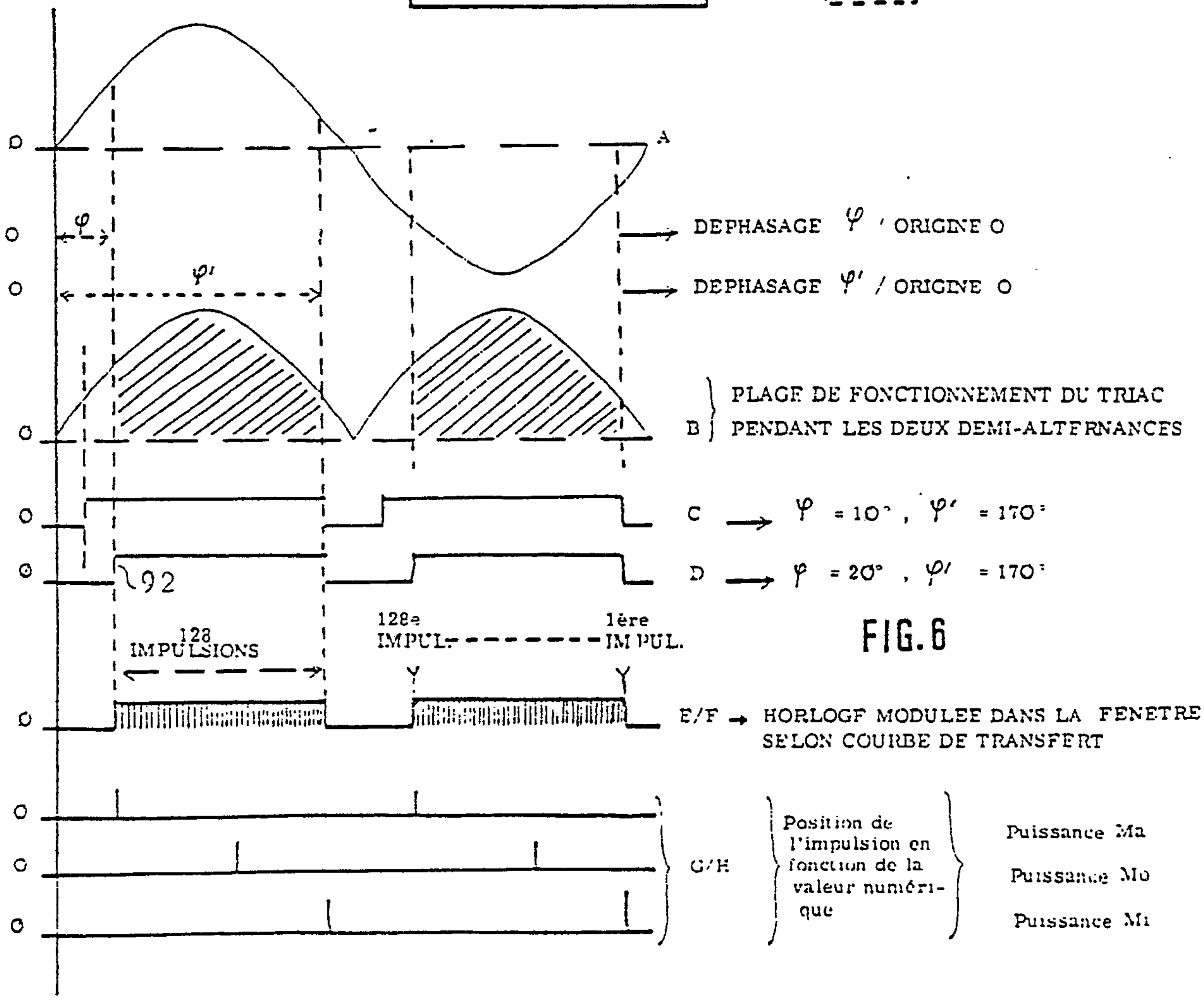
DEPHASAGE φ / ORIGINE O
DEPHASAGE φ' / ORIGINE O
PLAGE DE FONCTIONNEMENT DU TRIAC PENDANT LES DEUX DEMI-ALTERNANCES
φ = 10°, φ' = 170°
φ = 20°, φ' = 170°
92
128 IMPULSIONS
128e IMPUL.
1ère IMPUL.
E/F → HORLOGE MODULEE DANS LA FENETRE SELON COURBE DE TRANSFERT
G/H
Position de l'impulsion en fonction de la valeur numérique
Puissance Ma
Puissance Mo
Puissance Mi

FIG.6

FIG. 7

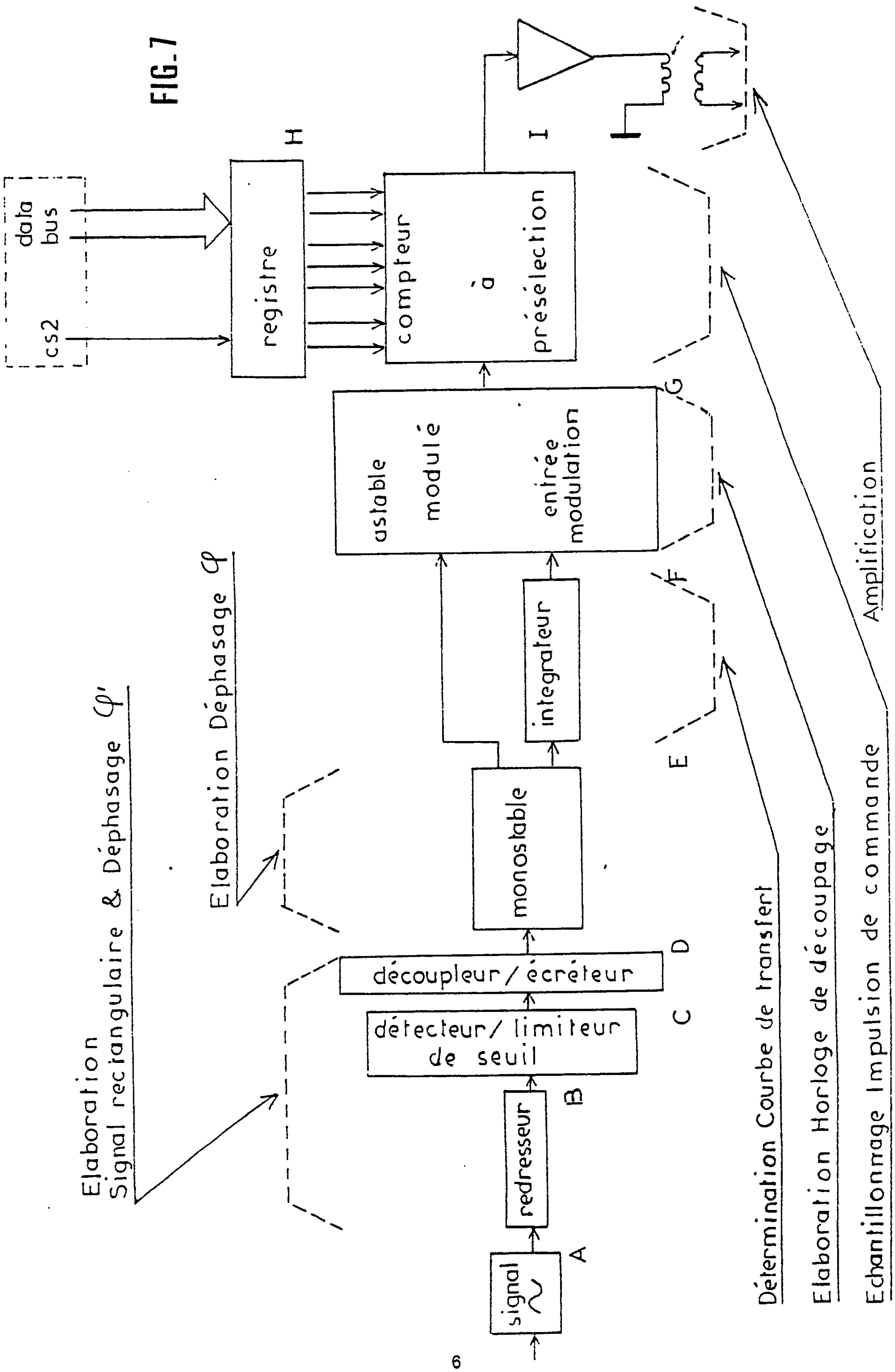
data bus
cs2
registre
H
compteur à présélection
I
astable modulé
entrée modulation
G
F
E
integrateur
monostable
D
découpleur / écréteur
C
détecteur / limiteur de seuil
B
redresseur
A
signal
Elaboration Signal rectangulaire & Déphasage φ'
Elaboration Déphasage φ
Détermination Courbe de transfert
Elaboration Horloge de découpage
Echantillonnage Impulsion de commande
Amplification

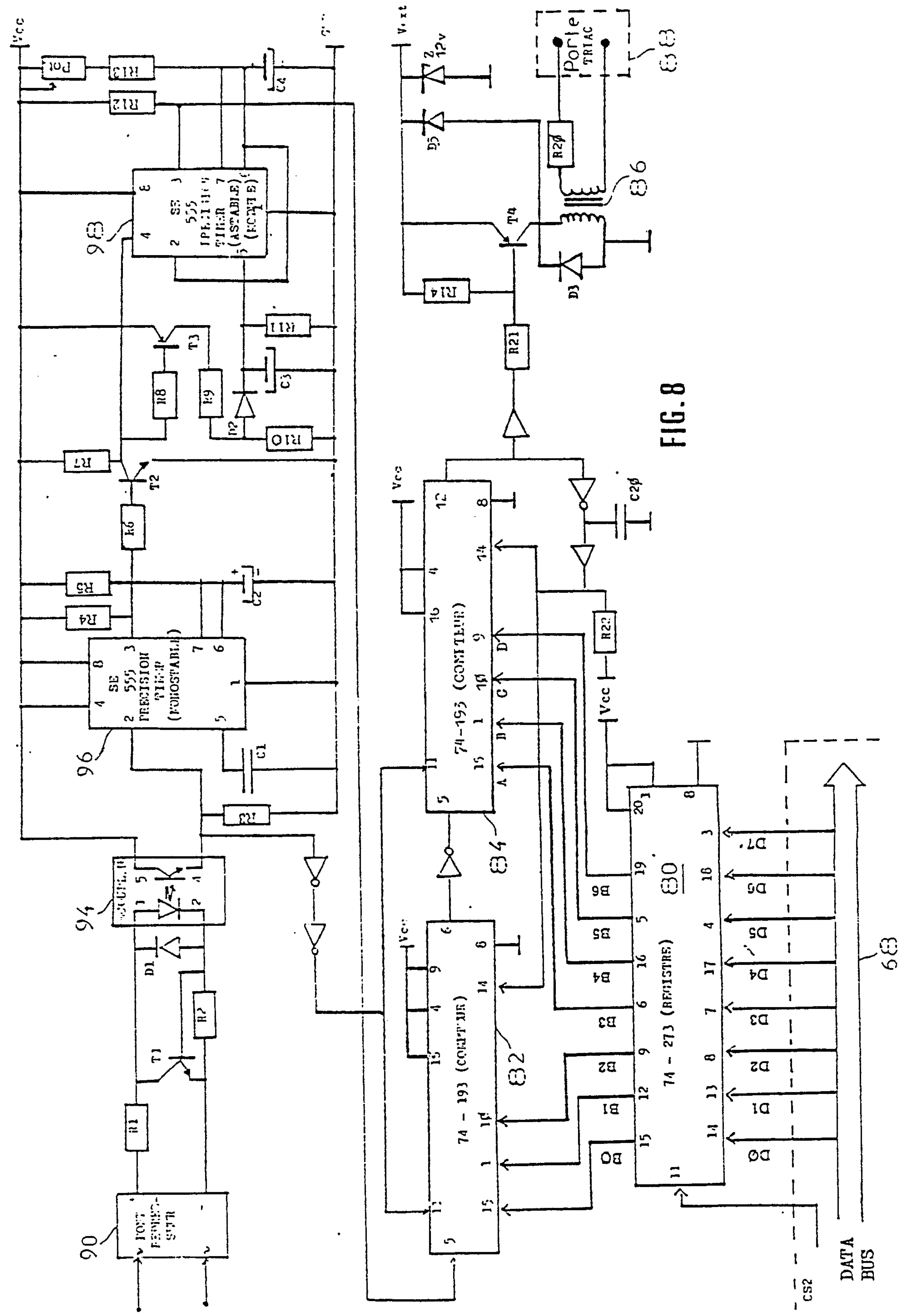
SE 555 PRECISION TIMER (MONOSTABLE)
74-193 (COMPTEUR)
74 - 193 (COMPTEUR)
74 - 273 (REGISTRE)
Porte TRIAC
DATA BUS
CS2
Vcc
Vext
12V
90
94
96
98
80
82
84
86
88
68

FIG. 8